# EUROPEAN PATENT APPLICATION

(11) **EP 4 417 638 A1**
(43) Date of publication of application: **21.08.2024**
(21) Application number: 22880696.4
(22) Date of filing: 12.09.2022
(51) Int. Cl.: C08G 59/24, C08G 59/62, C08J 5/24, F17C 1/06

(54) **EPOXY RESIN COMPOSITION, CURED PRODUCT THEREOF, PREPREG, FIBER-REINFORCED COMPOSITE MATERIAL, AND HIGH-PRESSURE GAS CONTAINER**

(30) Priority: 14.10.2021 JP 2021169007
(71) Applicant: MITSUBISHI GAS CHEMICAL COMPANY, INC., Chiyoda-ku Tokyo 100-8324 (JP)
(72) Inventor: WAKAHARA, Daiki, Tokyo 125-8601 (JP); IKEUCHI, Kousuke, Hiratsuka-shi, Kanagawa 254-0016 (JP); OHNISHI, Nobuyoshi, Tokyo 125-8601 (JP); OKADA, Kana, Hiratsuka-shi, Kanagawa 254-0016 (JP); MATSUMOTO, Nobuhiko, Hiratsuka-shi, Kanagawa 254-0016 (JP)
(74) Representative: Vossius & Partner Patentanwälte Rechtsanwälte mbB
(86) International application number: PCT/JP2022/034091
(87) International publication number: WO 2023/063000

(57) **Abstract**

Provided is an epoxy resin composition containing an epoxy resin (A), an epoxy resin curing agent (B) containing a phenolic curing agent, and a curing accelerator (C),
wherein the epoxy resin (A) contains from 10 to 85 mass% of an epoxy resin (A1) and from 15 to 90 mass% of an epoxy resin (A2), the epoxy resin (A1) having a glycidyloxy group derived from resorcinol, and the epoxy resin (A2) being other than the epoxy resin (A1) and containing an aromatic ring,
the epoxy resin (A2) contains at least one type selected from the group consisting of an epoxy resin (a2-1) having a glycidyloxy group derived from bisphenol F, and an epoxy resin (a2-2) having a glycidyloxy group derived from a polyol having a naphthalene backbone, and
a total content of the epoxy resin (a2-1) and the epoxy resin (a2-2) in the epoxy resin (A2) is 50 mass% or more. Also provided are a cured product of the epoxy resin composition, a prepreg using the epoxy resin composition, a fiber-reinforced composite material and a high-pressure gas container.

## Description

### Technical Field

The present invention relates to an epoxy resin composition and a cured product thereof, a prepreg, a fiber-reinforced composite material, and a high-pressure gas container containing the fiber-reinforced composite material.

### Background Art

In recent years, the use of environmentally-friendly natural gas vehicles (CNG vehicles) and fuel cell vehicles (FCV) has increased. Fuel cell vehicles are powered by fuel cells in which hydrogen is used as fuel, and thus the establishment of hydrogen stations at which vehicles are filled with hydrogen that is compressed to a high pressure is essential.

Thus far, steel tanks have been used as high-pressure gas storage tanks for hydrogen stations for fuel cell vehicles, or in other words, as vehicle-mounted fuel tanks for vehicles such as CNG vehicles and fuel cell vehicles. However, the development of lighter weight high-pressure gas storage tanks using a resin material in the liner or in the outer layer of the tank is progressing. Reducing the weight of a vehicle-mounted fuel tank has benefits such as improving the fuel economy of the vehicle in which the fuel tank is mounted.

As a resin material constituting a high-pressure gas storage tank, the use of a resin having a gas barrier property and a fiber-reinforced composite material (FRP) in which reinforcing fibers are impregnated with the resin is known. For example, Patent Document 1 discloses a method for producing a pressure container including a liner and an outer layer of the liner, the outer layer being configured by a composite material containing reinforcing fibers and a matrix resin, the method including winding the composite material around an outer periphery of the liner to form the outer layer by adopting the filament winding process or the tape winding process.

When a matrix resin in a composite material is not a thermoplastic resin but a cured product of a thermosetting resin, the winding process can be similarly adopted. In this case, a continuous reinforcing fiber bundle impregnated with a thermosetting resin (tow prepreg) is wound around an outer periphery of a liner, and then heated and cured to be molded.

A prepreg using an epoxy resin composition as a matrix resin is also known. For example, Patent Document 2 discloses: an epoxy resin composition containing an epoxy resin, a compound having two functional groups each having one active hydrogen that is reactive with an epoxy group in the molecule, and a curing agent; a prepreg and a fiber-reinforced composite material formed by impregnating reinforcing fibers with the epoxy resin composition.

Furthermore, as a thermosetting resin composition having a gas barrier property, for example, Patent Document 3 discloses a composition containing a meta-substituted aromatic resin, and an additional aromatic epoxy resin, and having an oxygen permeability equal to or less than a predetermined value, as an oxygen barrier composition for electric parts.

### Citation List

### Patent Document

Patent Document 1: WO 2016/084475
Patent Document 2: JP 2002-284852 A
Patent Document 3: JP 2012-533643 A

### Summary of Invention

### Technical Problem

In the preparation of the tow prepreg in which a reinforcing fiber yarn is impregnated with a thermosetting resin composition, examples of the methods adopted include impregnating a reinforcing fiber yarn with a thermosetting resin composition by immersing the reinforcing fiber yarn in a resin tank storing the thermosetting resin composition. The same step may be included in the manufacture of a pressure container adopting the filament winding process or the tape winding process.

However, the method described above had a problem that a thermosetting resin composition having a short pot life and a short shelf life cannot be applied because the thermosetting resin composition may be cured during storage, or during production steps (for example, while the thermosetting resin composition is stored in a resin tank). Furthermore, when the thermosetting resin composition is cured too quickly, heat is generated at the time of curing, which may cause problems such as scorching in the obtained molded body.

In addition, a high-pressure gas container for hydrogen gas storage, such as those used in a hydrogen station for a fuel cell vehicle or an on-vehicle fuel tank for a CNG vehicle, and a fuel cell vehicle, is required to have a high barrier property against hydrogen gas. However, none of Patent Documents 1 to 3 had discussed the hydrogen gas barrier property of the resin material, and there was room for improvement in this respect.

An object of the present invention is to provide an epoxy resin composition which has a long pot life and a long shelf life and thus is suitable for preparing a tow prepreg, causes less scorching during molding, and can achieve a high hydrogen gas barrier property. Also provided are a cured product of the epoxy resin composition, a prepreg, a fiber-reinforced composite material and a high-pressure gas container using the epoxy resin composition.

### Solution to Problem

The present inventors have found that the problems can be solved by an epoxy resin composition containing, as a main epoxy resin, a predetermined amount of an epoxy resin having a glycidyloxy group derived from resorcinol and a predetermined amount of a predetermined epoxy resin containing an aromatic ring, and further containing an epoxy resin curing agent containing a phenolic curing agent, and a curing accelerator.

That is, the present invention relates to the following.
[1] An epoxy resin composition containing an epoxy resin (A), an epoxy resin curing agent (B) containing a phenolic curing agent, and a curing accelerator (C),
   wherein the epoxy resin (A) contains from 10 to 85 mass% of an epoxy resin (A1) and from 15 to 90 mass% of an epoxy resin (A2), the epoxy resin (A1) having a glycidyloxy group derived from resorcinol, and the epoxy resin (A2) being other than the epoxy resin (A1) and containing an aromatic ring,
   the epoxy resin (A2) contains at least one type selected from the group consisting of an epoxy resin (a2-1) having a glycidyloxy group derived from bisphenol F, and an epoxy resin (a2-2) having a glycidyloxy group derived from a polyol having a naphthalene backbone, and
   a total content of the epoxy resin (a2-1) and the epoxy resin (a2-2) in the epoxy resin (A2) is 50 mass% or more.
[2] A cured product of the epoxy resin composition described in [1].
[3] A prepreg including a reinforcing fiber impregnated with the epoxy resin composition described in [1].
[4] A fiber-reinforced composite material which is a cured product of the prepreg described in [3].
[5] A high-pressure gas container containing the fiber-reinforced composite material described in [4].

### Advantageous Effects of Invention

The present invention provides an epoxy resin composition which has a long pot life and a long shelf life, is suitable for preparing a tow prepreg, causes little scorching during molding, and can achieve a high hydrogen gas barrier property. Also provided are a cured product of the epoxy resin, a prepreg, a fiber-reinforced composite material using the epoxy resin composition, and a high-pressure gas container containing the fiber-reinforced composite material. The high-pressure gas container has a high hydrogen gas barrier property and is suitable as a container for storing high-pressure hydrogen gas.

### Description of Embodiments

### Epoxy resin composition

The epoxy resin composition according to an embodiment of the present invention is an epoxy resin composition containing an epoxy resin (A), an epoxy resin curing agent (B) containing a phenolic curing agent, and a curing accelerator (C),
wherein the epoxy resin (A) contains from 10 to 85 mass% of an epoxy resin (A1) and from 15 to 90 mass% of an epoxy resin (A2), the epoxy resin (A1) having a glycidyloxy group derived from resorcinol, and the epoxy resin (A2) being other than the epoxy resin (A1) and containing an aromatic ring,
the epoxy resin (A2) contains at least one type selected from the group consisting of an epoxy resin (a2-1) having a glycidyloxy group derived from bisphenol F, and an epoxy resin (a2-2) having a glycidyloxy group derived from a polyol having a naphthalene backbone, and
a total content of the epoxy resin (a2-1) and the epoxy resin (a2-2) in the epoxy resin (A2) is 50 mass% or more.

Since the epoxy resin composition according to an embodiment of the present invention has such a constitution, it has a long pot life and a long shelf life, causes little scorching during molding, and can achieve a high hydrogen gas barrier property.

The reason why the production method of the present invention exhibits the effect described above is not clear, but can be assumed as follows.

The present inventors have found that the epoxy resin (A1) having a glycidyloxy group derived from resorcinol (hereinafter also simply referred to as "epoxy resin (A1)" or "component (Al)") has rapid curability among epoxy resins, and exhibits a high hydrogen gas barrier property.

On the other hand, the epoxy resin (A1) has a low epoxy equivalent and is rapid-curable, and thus readily reacts with an epoxy resin curing agent rapidly to generate heat during thermal curing. Therefore, it is found that when the content of the epoxy resin (A1) in the epoxy resin is too large, a problem such as discoloration or scorching may occur during heat molding. In addition, there was also a problem that the pot life and shelf life of the obtained epoxy resin composition became short, and thus the composition was not suitable for preparing a tow prepreg, and for producing a high-pressure gas container adopting the filament winding process, etc.

Here, the epoxy resin (A2) that is other than the epoxy resin (A1) and contains an aromatic ring (hereinafter also simply referred to as "epoxy resin (A2)" or "component (A2)") is relatively likely to exhibit a hydrogen gas barrier property among epoxy resins, and can also suppress heat generation during heat curing as compared to the epoxy resin (A1). In particular, the epoxy resin (a2-1) having a glycidyloxy group derived from bisphenol F, and the epoxy resin (a2-2) having a glycidyloxy group derived from a polyol having a naphthalene backbone do not impair the hydrogen gas barrier property derived from the epoxy resin (A1). It is considered that, when the total content of the epoxy resin (a2-1) and the epoxy resin (a2-2) in the epoxy resin (A2) is 50 mass% or more, the composition can achieve a high hydrogen gas barrier property.

Furthermore, in an embodiment of the present invention, it is considered that when the epoxy resin curing agent (B) containing a phenolic curing agent is used as the epoxy resin curing agent, the epoxy resin composition has an improved pot life and shelf life without impairing the hydrogen gas barrier property derived from the epoxy resin (A1). Furthermore, it is considered that when the epoxy resin curing agent (B) and the curing accelerator (C) are used in combination, the epoxy resin composition has an appropriate curing rate and less curing delay.

### <Epoxy resin (A)>

The epoxy resin (A) used in the epoxy resin composition according to an embodiment of the present invention contains from 10 to 85 mass% of an epoxy resin (A1) and from 15 to 90 mass% of an epoxy resin (A2), the epoxy resin (A1) having a glycidyloxy group derived from resorcinol, and the epoxy resin (A2) being other than the epoxy resin (A1) and containing an aromatic ring,
the epoxy resin (A2) contains at least one type selected from the group consisting of an epoxy resin (a2-1) having a glycidyloxy group derived from bisphenol F, and an epoxy resin (a2-2) having a glycidyloxy group derived from a polyol having a naphthalene backbone, and
a total content of the epoxy resin (a2-1) and the epoxy resin (a2-2) in the epoxy resin (A2) is 50 mass% or more. Accordingly, it is considered that an epoxy resin composition capable of achieving a high hydrogen gas barrier property while suppressing the occurrence of scorching during molding can be obtained.

### (Epoxy resin (A1))

The epoxy resin (A1) has a glycidyloxy group derived from resorcinol. Since the epoxy resin (A) contains the epoxy resin (A1), an epoxy resin composition which can achieve a high hydrogen gas barrier property can be provided.

The epoxy resin (A1) is typically resorcinol diglycidyl ether, and may contain oligomers in addition to resorcinol diglycidyl ether.

As the epoxy resin (A1), commercially available products such as "Denacol EX-201" manufactured by Nagase ChemteX Corporation can be used.

The content of the epoxy resin (A1) in the epoxy resin (A) is from 10 to 85 mass%, preferably from 15 to 85 mass%, more preferably from 20 to 85 mass%, still more preferably from 25 to 85 mass%, further still more preferably from 30 to 85 mass%, further still more preferably from 40 to 85 mass%, further still more preferably from 50 to 85 mass%, further still more preferably from 55 to 85 mass%, further still more preferably from 60 to 85 mass%, further still more preferably from 65 to 85 mass%, and further still more preferably from 65 to 80 mass%. When the content of the epoxy resin (A1) in the epoxy resin (A) is 10 mass% or more, the epoxy resin composition can readily realize a high hydrogen gas barrier property, and when the content is 85 mass% or less, scorching during molding can be suppressed.

### (Epoxy resin (A2))

The epoxy resin (A2) is other than the epoxy resin (A1) and contains an aromatic ring.

The epoxy resin (A2) contains at least one type selected from the group consisting of an epoxy resin (a2-1) having a glycidyloxy group derived from bisphenol F and an epoxy resin (a2-2) having a glycidyloxy group derived from a polyol having a naphthalene backbone. The total content of the epoxy resin (a2-1) and the epoxy resin (a2-2) in the epoxy resin (A2) is 50 mass% or more. Accordingly, an epoxy resin composition capable of achieving a high hydrogen gas barrier property while suppressing scorching during molding can be obtained.

### [Epoxy resin (a2-1)]

The epoxy resin (a2-1) has a glycidyloxy group derived from bisphenol F. The epoxy resin (a2-1) is typically bisphenol F diglycidyl ether, and may contain oligomers in addition to bisphenol F diglycidyl ether.

As the epoxy resin (a2-1), a commercially available product such as "jER807" available from Mitsubishi Chemical Corporation can be used.

### [Epoxy resin (a2-2)]

The epoxy resin (a2-2) has a glycidyloxy group derived from a polyol having a naphthalene backbone. The polyol having a naphthalene backbone may have one or more naphthalene backbones, and is preferably a polyol having one or two naphthalene backbone(s).

Furthermore, the number of the glycidyloxy groups in the epoxy resin is preferably from 2 to 4, more preferably from 2 to 3, from the viewpoint of providing an epoxy resin composition which has a long pot life and a long shelf life, and can achieve a high hydrogen gas barrier property.

As the epoxy resin (a2-2), an epoxy resin represented by either of the following general formula (a2-2-1) or (a2-2-2) can be preferably exemplified: 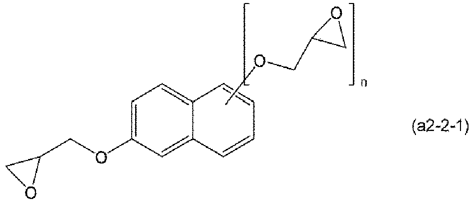 wherein n is from 1 to 3 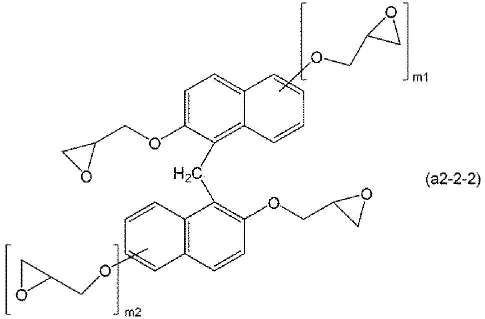 wherein m1 is from 0 to 2, m2 is from 0 to 2, and the sum of m1 and m2 is from 0 to 3.

In general formula (a2-2-1), n is preferably 1 or 2, and more preferably 1.

In general formula (a2-2-2), m1 is preferably 0 or 1, m2 is preferably 0 or 1, and the total of m1 and m2 is preferably from 0 to 2, and more preferably 0.

More specifically, as the epoxy resin (a2-2), an epoxy resin represented by any of the following formulae (a2-2-3) to (a2-2-6) can be exemplified.

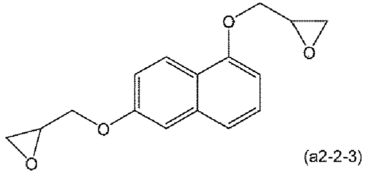

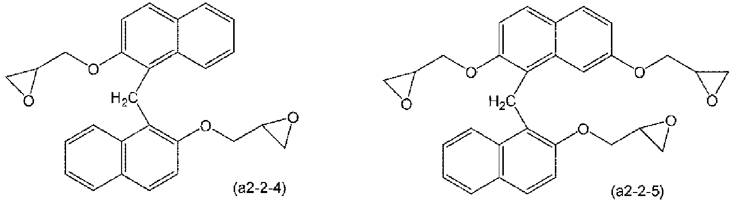

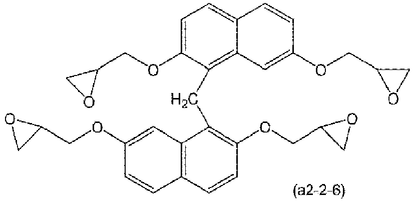

As the epoxy resin (a2-2), a commercially available product can also be used. Examples thereof include EPICLON series "HP-4032SS" (an epoxy resin represented by the formula (a2-2-3)), "HP-4700" and "HP-4710" (epoxy resins represented by the formula (a2-2-6)), "EXA-4750" (an epoxy resin represented by the formula (a2-2-5)), "HP-4770" (an epoxy resin represented by the formula (a2-2-4)), "HP-5000", "HP-9900-75M" and "HP-9500", etc., which are available from DIC Corporation.

As the epoxy resin (a2-2), one or two or more types can be used. Among them, the epoxy resin represented by the general formula (a2-2-1) is preferable as the epoxy resin (a2-2), and the epoxy resin represented by the formula (a2-2-3) is more preferable, from the viewpoint of providing an epoxy resin composition having a long pot life and a long shelf life, and capable of achieving a high hydrogen gas barrier property.

In a case where the epoxy resin (a2-1) is used, the content of the epoxy resin (a2-1) in the epoxy resin (A2) is preferably 10 mass% or more, more preferably 20 mass% or more, still more preferably 30 mass% or more, and still more preferably 50 mass% or more, and 100 mass% or less.

In a case where the epoxy resin (a2-2) is used, the content of the epoxy resin (a2-2) in the epoxy resin (A2) is preferably 10 mass% or more, more preferably 20 mass% or more, still more preferably 30 mass% or more, and still more preferably 50 mass% or more, and 100 mass% or less.

In a case where the epoxy resins (a2-1) and (a2-2) are used, the mass ratio of the epoxy resins (a2-1) and (a2-2) is preferably from 1/10 to 10/1, more preferably from 1/5 to 5/1, still more preferably from 1/3 to 3/1.

Furthermore, the total content of the epoxy resin (a2-1) and the epoxy resin (a2-2) in the epoxy resin (A2) is 50 mass% or more, preferably 60 mass% or more, more preferably 75 mass% or more, still more preferably 80 mass% or more, still more preferably 85 mass% or more, still more preferably 90 mass% or more, and still more preferably 95 mass% or more, and 100 mass% or less, from the viewpoint of achieving a high hydrogen gas barrier property while suppressing scorching during molding.

The epoxy resin (A2) other than the epoxy resin (a2-1) and the epoxy resin (a2-2) may be an epoxy resin containing at least one aromatic ring and at least two epoxy groups. The aromatic ring may be a single ring or a condensed ring, and examples thereof include, but are not limited to, a benzene ring, a naphthalene ring, an anthracene ring, and a tetracene ring. Among them, a benzene ring is preferable.

Specific examples of the epoxy resin include at least one selected from the group consisting of an epoxy resin having a glycidylamino group derived from meta-xylylenediamine, an epoxy resin having a glycidylamino group derived from para-xylylenediamine, an epoxy resin having a glycidylamino group derived from diaminodiphenylmethane, an epoxy resin having a glycidylamino group and/or a glycidyloxy group derived from para-aminophenol, an epoxy resin having a glycidyloxy group derived from bisphenol A, and an epoxy resin having a glycidyloxy group derived from phenol novolac. In order to improve various performance aspects such as flexibility, impact resistance, and moist heat resistance, two or more types of the epoxy resins described above may be mixed at an appropriate ratio and used.

Among the above, from the viewpoint of achieving a high hydrogen gas barrier property while suppressing scorching during molding, the epoxy resin (A2) other than the epoxy resin (a2-1) and the epoxy resin (a2-2) is preferably at least one type selected from the group consisting of an epoxy resin having a glycidylamino group derived from meta-xylylenediamine, an epoxy resin having a glycidylamino group derived from para-xylylenediamine, and an epoxy resin having a glycidyloxy group derived from bisphenol A.

From the viewpoint of obtaining an epoxy resin composition capable of achieving a high hydrogen gas barrier property, the epoxy resin (A2) more preferably includes only at least one type selected from the group consisting of an epoxy resin (a2-1) and an epoxy resin (a2-2).

The content of the epoxy resin (A2) in the epoxy resin (A) is 15 to 90 mass%, preferably from 15 to 85 mass%, more preferably from 15 to 80 mass%, still more preferably from 15 to 75 mass%, further still more preferably from 15 to 70 mass%, further still more preferably from 15 to 60 mass%, further still more preferably from 15 to 50 mass%, further still more preferably from 15 to 45 mass%, further still more preferably from 15 to 40 mass%, further still more preferably from 15 to 35 mass%, and further still more preferably from 20 to 35 mass%. When the content of the epoxy resin (A2) in the epoxy resin (A) is 15 mass% or more, scorching during molding can be suppressed, and when the content is 90 mass% or less, an epoxy resin composition that does not significantly impair the hydrogen gas barrier property derived from the epoxy resin (A1) can be obtained.

The epoxy resin (A) can also contain an epoxy resin other than the epoxy resin (A1) and the epoxy resin (A2). Examples of the epoxy resins other than the epoxy resin (A1) and the epoxy resin (A2) include an aliphatic epoxy resin having no aromatic ring. Examples of the aliphatic epoxy resin having no aromatic ring include a chain aliphatic epoxy resin, an aliphatic epoxy resin having an alicyclic structure, etc.

Note that, from the viewpoint of exhibiting a high hydrogen gas barrier property, the total content of the epoxy resin (A1) and the epoxy resin (A2) in the epoxy resin (A) is preferably 70 mass% or more, more preferably 80 mass% or more, still more preferably 90 mass% or more, and still more preferably 95 mass% or more, and 100 mass% or less.

The epoxy equivalent of the epoxy resin (A) is preferably 400 g/eq or less, more preferably 300 g/eq or less, still more preferably 250 g/eq or less, still more preferably 220 g/eq or less, still more preferably 200 g/eq or less, still more preferably 180 g/eq or less, and still more preferably 160 g/eq or less, from the viewpoint of curability. Furthermore, from the viewpoint of suppressing scorching at the time of molding, it is preferably 120 g/eq or more.

### <Epoxy resin curing agent (B) containing phenolic curing agent>

The epoxy resin curing agent (B) used in the epoxy resin composition according to an embodiment of the present invention contains a phenolic curing agent. It is considered that this configuration can suppress heat generation during molding and improve the pot life and shelf life.

### (Phenolic curing agent)

As the phenolic curing agent, a novolac curing agent having two or more phenolic hydroxyl groups, such as a phenol novolac-type curing agent, a cresol novolac-type curing agent, a resorcinol novolac-type curing agent, and a bisphenol A novolac-type curing agent can be used. From the viewpoint of curability, and from the viewpoint of exhibiting a high hydrogen gas barrier property, the phenolic curing agent is preferably at least one type selected from the group consisting of a phenol novolac-type curing agent, a cresol novolac-type curing agent, and a bisphenol A novolac-type curing agent, and more preferably a phenol novolac-type curing agent.

The hydroxyl group equivalent of the phenolic curing agent is usually 100 g/eq or more, and from the viewpoint of curability and expression of a high hydrogen gas barrier property, the hydroxyl group equivalent is preferably 160 g/eq or less, more preferably 150 g/eq or less, still more preferably 130 g/eq or less, and still more preferably 120 g/eq or less.

The softening point of the phenolic curing agent is preferably from 70 to 120°C, more preferably from 75 to 110°C, even more preferably from 75 to 95°C, and even more preferably from 75 to 85°C from the viewpoint of curability and from the viewpoint of exhibiting a high hydrogen gas barrier property. The softening point can be measured by, for example, a thermomechanical analyzer (TMA).

As the phenolic curing agent, a commercially available product can also be used. Examples thereof include PHENOLITE series "TD-2131", "TD-2106", "TD-2093", "TD-2091", "TD-2090", "VH-4150", "VH-4170", "KH-6021", "KA-1160", "KA-1163", and "KA-1165", which are available from DIC Corporation.

The content of the phenolic curing agent in the epoxy resin curing agent (B) is preferably 50 mass% or more, more preferably 60 mass% or more, still more preferably 70 mass% or more, still more preferably 80 mass% or more, still more preferably 85 mass% or more, still more preferably 90 mass% or more, and still more preferably 95 mass% or more, and 100 mass% or less, from the viewpoint of suppressing heat generation during molding and improving pot life and shelf life.

The epoxy resin curing agent (B) can also contain an epoxy resin curing agent other than the phenolic curing agent. Examples of the epoxy resin curing agent other than the phenolic curing agent include a compound having two or more groups having active hydrogen that is reactive with the epoxy group in the epoxy resin (A). Examples of the epoxy resin curing agent include an amine curing agents, an acid anhydride curing agent, and a hydrazide curing agent.

However, the content of the epoxy resin curing agent other than the phenolic curing agent in the epoxy resin curing agent (B) is preferably 50 mass% or less, more preferably 40 mass% or less, even more preferably 30 mass% or less, even more preferably 20 mass% or less, even more preferably 15 mass% or less, even more preferably 10 mass% or less, even more preferably 5 mass% or less, and even more preferably 0 mass% from the viewpoint of suppressing heat generation during molding and improving pot life and shelf life.

### <Curing accelerator (C)>

The epoxy resin composition according to an embodiment of the present invention contains a curing accelerator (C). The use of the curing accelerator (C) can suppress curing delay due to the use of a phenolic curing agent and accelerate curing.

The curing accelerator (C) is preferably at least one type selected from the group consisting of imidazoles, tertiary amines, and phosphorus compounds.

Examples of the imidazoles include 1-cyanoethyl-2-ethyl-4-methylimidazole and 2-ethyl-4-methylimidazole.

Examples of the tertiary amines include tertiary amines capable of accelerating curing with a phenolic curing agent and salts thereof, such as 1,8-diazabicyclo[5.4.0]-undecene-7 (DBU), 1,5-diazabicyclo [4.3.0]-nonene-5 (DBN), and tris (dimethylaminomethylphenol).

Examples of the phosphorus compound include phosphine compounds such as triphenylphosphine and phosphonium salts such as tetraphenylphosphonium tetraphenylborate.

One or two or more types of the curing accelerator (C) can be used. Among the above, from the viewpoint of improving curability, it is preferably at least one type selected from the group consisting of imidazoles and tertiary amines, more preferably imidazoles, and still more preferably at least one selected from the group consisting of 1-cyanoethyl-2-ethyl-4-methylimidazole and 2-ethyl-4-methylimidazole.

### <Solvent>

The epoxy resin composition according to an embodiment of the present invention can further contain a solvent from the viewpoint of reducing the viscosity of the composition when used for preparing a prepreg to enhance the impregnation property into reinforcing fibers.

Examples of the solvent include alcohol solvents such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol and 1-propoxy-2-propanol; ester solvents such as ethyl acetate and butyl acetate; ketone solvents such as acetone, methyl ethyl ketone and methyl isobutyl ketone; ether solvents such as diethyl ether and diisopropyl ether; hydrocarbon solvents such as toluene; and one or two or more of these can be used.

From the viewpoint of the solubility of the components (A) to (C) and the viewpoint of the ease of removal of the solvent, the solvent is preferably at least one selected from the group consisting of an alcohol-based solvent, an ester-based solvent, a ketone-based solvent, and a hydrocarbon-based solvent, having 8 or less carbon atoms, and more preferably at least one selected from the group consisting of methanol, ethanol, 1-propanol, 2-propanol, 1-butanol, 2-butanol, ethyl acetate, methyl ethyl ketone, methyl isobutyl ketone, and toluene.

### <Content>

The content ratio of the epoxy resin (A) and the epoxy resin curing agent (B) in the epoxy resin composition according to an embodiment of the present invention is an amount such that the ratio of the number of active hydrogens in the epoxy resin curing agent to the number of epoxy groups in the epoxy resin (the number of active hydrogens in the epoxy resin curing agent/the number of epoxy groups in the epoxy resin) is preferably from 1/0.5 to 1/2, more preferably from 1/0.75 to 1/1.5, and still more preferably from 1/0.8 to 1/1.2. It is sufficient that the ratio is within the range described above in the final product, and may be constant during molding of the epoxy resin composition or may be varied during molding.

The content of the epoxy resin (A) in the epoxy resin composition according to an embodiment of the present invention is not limited as long as the content ratio of the epoxy resin (A) and the epoxy resin curing agent (B) is preferably within the above range, but is preferably 40 to 80 mass%, more preferably 45 to 70 mass%, and still more preferably 45 to 60 mass% in 100 mass% of the solid content in the epoxy resin composition. The "solid content in the epoxy resin composition" is an amount obtained by subtracting water and an organic solvent from the total amount of the epoxy resin composition.

In a case where the epoxy resin composition does not contain a solvent, the content of the epoxy resin (A) in the epoxy resin composition is preferably 40 to 80 mass%, more preferably 45 to 70 mass%, and still more preferably 45 to 60 mass%.

The content of the epoxy resin curing agent (B) in the epoxy resin composition according to an embodiment of the present invention is not limited as long as the content ratio between the epoxy resin (A) and the epoxy resin curing agent (B) is preferably in the range described above, but is preferably from 10 to 60 mass%, more preferably from 15 to 60 mass%, still more preferably from 20 to 50 mass%, and still more preferably from 30 to 50 mass% in 100 mass% of the solid content in the epoxy resin composition. In a case where the epoxy resin composition does not contain a solvent, the content of the epoxy resin curing agent (B) in the epoxy resin composition is preferably from 10 to 60 mass%, more preferably from 15 to 60 mass%, still more preferably from 20 to 50 mass%, and still more preferably from 30 to 50 mass%.

The content of the curing accelerator (C) in the epoxy resin composition according to an embodiment of the present invention is preferably from 0.05 to 10 parts by mass, more preferably from 0.1 to 5 parts by mass, and still more preferably from 0.5 to 3 parts by mass with respect to 100 parts by mass of the epoxy resin (A) from the viewpoint of improving curability.

In a case where the epoxy resin composition contains a solvent, the content thereof is not particularly limited, but is preferably 5 mass% or more, more preferably 10 mass% or more, and still more preferably 15 mass% or more in the epoxy resin composition from the viewpoint of lowering the viscosity of the composition to enhance impregnation of the composition into reinforcing fibers when used for preparing a prepreg, and is preferably 95 mass% or less, more preferably 90 mass% or less, still more preferably 80 mass% or less, and still more preferably 70 mass% or less from the viewpoint of ease of removal of the solvent.

The total content of the epoxy resin (A), the epoxy resin curing agent (B), and the curing accelerator (C) in the solid content of the epoxy resin composition is preferably 70 mass% or greater, more preferably 80 mass% or greater, even more preferably 90 mass% or greater, and yet even more preferably 95 mass% or greater, and 100 mass% or less, in 100 mass% of the solid content in the epoxy resin composition, from the viewpoint of effective expression of the effect of the present invention. In a case where the epoxy resin composition does not contain a solvent, the total content of the epoxy resin (A), the epoxy resin curing agent (B), and the curing accelerator (C) in the epoxy resin composition is preferably 70 mass% or more, more preferably 80 mass% or more, still more preferably 90 mass% or more, even still more preferably 95 mass% or more, and 100 mass% or less.

The epoxy resin composition according to an embodiment of the present invention may further contain other components such as a filler, a modifying component such as a plasticizer, a flow adjusting component such as a thixotropic agent, a reactive or non-reactive diluent, a pigment, a leveling agent, a tackifier, and a stress relaxation component depending on the application. Examples of the stress relaxation component include elastomer particles such as silicone-based, butyl acrylate-based, polyether amine-based, and other rubber particles.

In a case where the epoxy resin composition according to an embodiment of the present invention is used for preparing a prepreg and a fiber-reinforced composite material which will be described later, the content of the filler in the epoxy resin composition is preferably small from the viewpoint of enhancing the impregnation of the composition into the reinforcing fiber. The content of the filler in the epoxy resin composition is preferably 30 mass% or less, more preferably 20 mass% or less, still more preferably 15 mass% or less, still more preferably 10 mass% or less, still more preferably 5 mass% or less, and still more preferably 0 mass%. Examples of the filler include inorganic powders such as silica powder and alumina powder.

### <Hydrogen Gas Permeability Coefficient>

The cured product of the epoxy resin composition according to an embodiment of the present invention exhibits a high hydrogen gas barrier property. The hydrogen gas permeability coefficient of the cured product of the epoxy resin composition according to an embodiment of the present invention can be preferably 8.4 × 10⁻¹¹[cc·cm/(cm²·scmHg)], more preferably 8.0 × 10⁻¹¹ or less [cc·cm/(cm²·s·cmHg)], further preferably 7.5 × 10⁻¹¹ or less [cc·cm/(cm² ·s·cmHg)], more preferably 7.0 × 10⁻¹¹ or less [cc·cm/(cm² ·s·cmHg)], even more preferably 6.5 × 10⁻¹¹ or less [cc·cm/(cm² ·s·cmHg)], even more preferably 6.0 × 10⁻¹¹ or less [cc·cm/(cm² ·s·cmHg)], even more preferably 5.5 × 10⁻¹¹ or less [cc·cm/(cm²·s·cmHg)], even more preferably 5.0 × 10⁻¹¹ or less [cc·cm/(cm²·s·cmHg)].

The hydrogen gas permeability coefficient of the cured product of the epoxy resin composition can be measured by the method described in the examples using a cured product having a thickness of 1 mm under dry conditions at 23°C.

### <Pot Life>

The epoxy resin composition according to an embodiment of the present invention has a long pot life (usable time). For example, the pot life of the epoxy resin composition at 23°C is preferably 3 hours or more, more preferably 6 hours or more, even more preferably 12 hours or more, and still more preferably 24 hours or more. The pot life of the epoxy resin composition can be measured specifically by the method described in Examples.

### <Shelf Life>

The epoxy resin composition according to an embodiment of the present invention has a long shelf life (storage life). For example, the shelf life of the epoxy resin composition at 0°C is preferably 7 days or more, more preferably 14 days or more, and still more preferably 30 days or more. The shelf life of the epoxy resin composition can be measured specifically by the method described in Examples.

The method for preparing the epoxy resin composition according to an embodiment of the present invention is not particularly limited, and the epoxy resin composition can be prepared by mixing the epoxy resin (A), the epoxy resin curing agent (B), the curing accelerator (C), and if necessary, other components using known method and apparatus. The order of mixing of the components contained in the epoxy resin composition is also not particularly limited. The epoxy resin composition may be prepared by mixing the component (A1) and the component (A2) constituting the epoxy resin (A) and then mixing them with other components. Alternatively, the epoxy resin composition may be prepared by simultaneously mixing the component (A1), the component (A2) constituting the epoxy resin (A), and other components.

From the viewpoint of avoiding the progress of gelation before use, the respective components contained in the epoxy resin composition are preferably brought into contact with and mixed immediately before use. The temperature at which the components contained in the epoxy resin composition are mixed can be appropriately adjusted depending on the viscosity of the epoxy resin, and is preferably 120°C or lower, more preferably 100°C or lower from the viewpoint of suppressing an increase in viscosity, and is preferably 20°C or higher, more preferably 25°C or higher from the viewpoint of miscibility of the epoxy resin. Furthermore, the mixing time is preferably in the range of from 0.1 to 15 minutes, more preferably from 0.2 to 10 minutes, and still more preferably from 0.3 to 5 minutes.

### [Cured product]

The cured product of the epoxy resin composition according to an embodiment of the present invention (hereinafter, also simply referred to as "cured product of the present invention") is obtained by curing the epoxy resin composition according to an embodiment of the present invention by a known method. The curing conditions of the epoxy resin composition are appropriately selected depending on the application and form, and are not particularly limited.

The form of the cured product according to an embodiment of the present invention is also not particularly limited and can be selected according to the application. For example, in a case where the application of the epoxy resin composition is a coating material, the cured product of the composition is usually in the form of a film. From the viewpoint of effectively exhibiting the effects of the present invention, the cured product according to an embodiment of the present invention is preferably a matrix resin of a fiber-reinforced composite material described below.

### [Prepreg]

The prepreg according to an embodiment of the present invention is produced by impregnating reinforcing fibers with the epoxy resin composition.

### <Reinforcing Fiber>

Examples of the form of the reinforcing fibers used in the prepreg include short fibers, long fibers, and continuous fibers. Among them, from the viewpoint of using the prepreg to produce a high-pressure gas container by the filament winding process or the tape winding process, long fibers or continuous fibers are preferable, and continuous fibers are more preferable.

Note that in the present specification, short fibers have a fiber length of from 0.1 mm to less than 10 mm, and long fibers have a fiber length of from 10 mm to 100 mm. In addition, continuous fibers also refer to a fiber bundle having a fiber length of greater than 100 mm.

Examples of the shape of the continuous fibers include a tow, a sheet, a tape, etc., and examples of the continuous fibers constituting the sheet or the tape include a unidirectional (UD) material, a woven fabric, a nonwoven fabric, etc.

From the viewpoint of producing a high-pressure gas container by the filament winding process or the tape winding process using a prepreg, the shape of the continuous fibers is preferably a tow or a tape, and more preferably a tow. The number of continuous fiber bundles (the number of filaments) constituting the tow is preferably from 3 K to 50 K, and more preferably from 6 K to 40 K, from the viewpoint of easily producing the prepreg with high strength and high elastic modulus.

The average fiber length of the continuous fiber bundle is not particularly limited, but from the viewpoint of molding processability, the average fiber length is preferably from 1 to 10000 m, and more preferably from 100 to 10000 m.

From the viewpoint of molding processability and the viewpoint of easily obtaining a high strength and a high elastic modulus, the average fineness of the continuous fiber bundle is preferably from 50 to 2000 tex (g/1000 m), more preferably from 200 to 1500 tex, and even more preferably from 500 to 1500 tex.

Also, the average tensile modulus of the continuous fiber bundle is preferably from 50 to 1000 GPa.

Examples of materials of the reinforcing fibers include inorganic fibers, such as carbon fibers, glass fibers, basalt fibers, metal fibers, boron fibers, and ceramic fibers; and organic fibers such as aramid fibers, polyoxymethylene fibers, aromatic polyamide fibers, polyparaphenylene benzobisoxazole fibers, and ultra-high molecular weight polyethylene fibers. Among them, inorganic fibers are preferable from the viewpoint of obtaining high strength, at least one selected from the group consisting of carbon fibers, glass fibers, and basalt fibers is preferable from the viewpoint of the lightweight property, high strength, and high elastic modulus, and carbon fibers are more preferable from the viewpoint of strength and the lightweight property.

Examples of carbon fibers include polyacrylonitrile-based carbon fibers and pitch-based carbon fibers. In addition, a carbon fiber made from a plant-derived raw material, such as lignin or cellulose, can also be used.

The reinforcing fibers may be treated with a treatment agent. Examples of the treatment agent include a surface treatment agent or a sizing agent.

A silane coupling agent is preferable as the surface treatment agent. Examples include a silane coupling agent having a vinyl group, a silane coupling agent having an amino group, a silane coupling agent having an epoxy group, a silane coupling agent having a (meth)acrylic group, and a silane coupling agent having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and of these, a single sizing agent can be used, or two or more can be used in combination. Examples of combinations of two or more sizing agents include urethane/epoxy-based sizing agents, urethane/acrylic-based sizing agents, and urethane/carboxylic acid-based sizing agents.

From the viewpoints of improving the interfacial adhesiveness to the cured product of the epoxy resin composition and further improving the strength, impact resistance of the obtained prepreg and composite material, the amount of the treatment agent is preferably from 0.001 to 5 mass%, more preferably from 0.1 to 3 mass%, and even more preferably from 0.5 to 2 mass%, relative to the amount of the reinforcing fibers.

Commercially available products can be also used as the reinforcing fibers. Examples of commercially available continuous carbon fibers (tows) include the respective series of TORAYCA YARN "T300", "T300B", "T400HB", "T700S", "T700SC", "T800SC", "T800HB", "T830HB", "T1000GB", "T100GC", "M35JB", "M40JB", "M46JB", "M50JB", "M55J", "M55JB", "M60JB", "M30SC", "Z600", etc., which are available from Toray Industries, Inc.; TENAX "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, "HTS40MC" series, etc., which are available from Teijin Limited; carbon fiber tows such as PYROFII, "HT", "IM", "HM" series, GRAFII, "HT" series and "DIALEAD" series, which are available from Mitsubishi Chemical Corporation; etc.

Furthermore, examples of commercially available continuous carbon fibers other than tows include carbon fiber fabrics such as TORAYCA CLOTH "CO6142", "CO6151B", "CO6343", "CO6343B", "CO6347B", "CO6644B", "CK6244C", "CK6273C", "CK6261C", "UT70" series, "UM46" series, "BT70" series, "T300" series, "T300B" series, "T400HB" series, "T700SC" series, "T800SC" series, "T800HB" series, "T1000GB" series, "M35JB" series, "M40JB" series, "M46JB" series, "M50JB" series, "M55J" series, "M55JB" series, "M60JB" series, "M30SC" series, "Z600GT" series, which are available from Toray Industries, Inc.; carbon fiber fabrics such as PYROFIL "TR3110M", "TR3523M", "TR3524M", "TR6110HM", "TR6120HM", "TRK101M", "TRK510M", "TR3160TMS", "TRK979PQRW", "TRK976PQRW", "TR6185HM" and "TRK180M", which are available from Mitsubishi Chemical Corporation; etc.

### <Content>

From the viewpoint of producing the prepreg with a high strength and a high elastic modulus, the content of the reinforcing fibers in the prepreg according to an embodiment of the present invention is in a range in which the volume fraction of reinforcing fibers in the prepreg is preferably in a range of 0.10 or more, more preferably 0.20 or more, even more preferably 0.30 or more, and yet even more preferably 0.40 or more. In addition, from the viewpoints of hydrogen gas barrier properties, impact resistance, and molding processability, the content of the reinforcing fibers is preferably in a range of 0.85 or less, more preferably 0.80 or less, and even more preferably 0.70 or less.

A volume fraction Vf₁ of the reinforcing fibers in the prepreg can be calculated from the following equation. Vf1 = {(mass (g) of reinforcing fibers)/(specific gravity of reinforcing fibers)} ÷ [{(mass (g) of reinforcing fibers)/(specific gravity of reinforcing fibers)} + {(mass (g) of solid content of infiltrated epoxy resin composition)/(specific gravity of solid content of epoxy resin composition)}]

From the viewpoint of obtaining the effect of the present invention, the total content of the solid content and the reinforcing fibers in the epoxy resin composition constituting the prepreg according to an embodiment of the present invention is preferably 70 mass% or more, more preferably 80 mass% or more, still more preferably 90 mass% or more, and the upper limit is 100 mass%.

### <Shape and Manufacturing Method of Prepreg>

The shape of the prepreg varies depending on the form of the reinforcing fiber to be used, but it is preferably a tow prepreg from the viewpoint of producing a high-pressure gas container by the filament winding process.

In addition, when continuous fibers in the form of a unidirectional (UD) material, a woven fabric, a nonwoven fabric, etc. are used, a prepreg having a tape shape or a sheet shape can also be used. Among them, from the viewpoint of producing a high-pressure gas container by the tape winding process, a tape-shaped prepreg is preferable, and a UD tape is more preferable.

The method for producing the prepreg is not particularly limited, and the prepreg can be produced according to a conventional method. For example, a prepreg can be obtained produced by impregnating reinforcing fibers with an epoxy resin composition containing an epoxy resin (A), an epoxy resin curing agent (B), a curing accelerator (C), and a solvent used if necessary, and then subjecting the impregnated reinforcing fibers to a drying step if necessary to remove the solvent.

The method for impregnating the reinforcing fibers with the epoxy resin composition is not particularly limited, and a known method can be appropriately used depending on the form of the reinforcing fibers, etc. For example, in the case of producing a tow prepreg, a method including immersing a continuous fiber bundle unwound from a roll in a resin bath filled with the epoxy resin composition described above, impregnating the continuous fiber bundle with the composition, and then pulling up the continuous fiber bundle from the resin bath can be exemplified. Thereafter, removing the excess epoxy resin composition using a drawing roll, etc. may be performed.

The impregnation with the epoxy resin composition may be performed under a pressurized condition, or a reduced pressure condition, if necessary.

Next, if necessary, the reinforcing fiber impregnated with the epoxy resin composition is subjected to drying to remove the solvent. The drying conditions in the drying are not particularly limited, but are preferably conditions under which the solvent can be removed and curing of the epoxy resin composition does not excessively proceed. From this viewpoint, for example, the drying temperature can be selected in the range of from 30 to 120°C, and the drying time can be selected in the range of from 10 seconds to 5 minutes.

The prepreg obtained through the drying may be wound once, etc. to form a prepreg product, or may be continuously subjected to the production of a fiber-reinforced composite material after being subjected to the drying without being wound, etc.

### [Fiber-reinforced composite material]

The fiber-reinforced composite material (FRP, hereinafter also simply referred to as "composite material") according to an embodiment of the present invention is a cured product of the prepreg, and contains a cured product of the epoxy resin composition and reinforcing fibers. The fiber-reinforced composite material according to an embodiment of the present invention contains a cured product of the epoxy resin composition and thus has a high hydrogen barrier property. The prepreg, the epoxy resin composition, the reinforcing fibers, and preferred aspects thereof used in the production of the composite material are the same as those described above.

From the viewpoint of obtaining a high strength and a high elastic modulus, the content of the reinforcing fibers in the fiber-reinforced composite material is in a range that makes the volume fraction of the reinforcing fibers in the fiber-reinforced composite material preferably 0.10 or more, more preferably 0.20 or more, still more preferably 0.30 or more, and still more preferably 0.40 or more. In addition, from the viewpoints of hydrogen gas barrier properties, impact resistance, and molding processability, the content of the reinforcing fibers is preferably in a range of 0.85 or less, more preferably 0.80 or less, and even more preferably 0.70 or less.

A volume fraction Vf of the reinforcing fibers in the fiber-reinforced composite material can be calculated from the following equation. Vf = {(mass (g) of reinforcing fibers)/(specific gravity of reinforcing fibers)} / [{(mass (g) of reinforcing fibers)/(specific gravity of reinforcing fibers)} + {(mass (g) of cured product of epoxy resin composition)/(specific gravity of cured product of epoxy resin composition)}]

### <Method for producing fiber-reinforced composite material>

The composite material can be produced by pre-molding the prepreg so as to have a desired shape, and then curing the prepreg. For example, when the composite material according to an embodiment of the present invention is applied to a molded body having a hollow shape such as a pipe, a shaft, a cylinder, or a tank, a composite material can be produced by molding a tow prepreg by the filament winding process, the braiding process, the 3D printer process, etc. Alternatively, a composite material can also be produced by molding a tape-shaped prepreg such as a UD tape by the tape winding process.

In the filament winding process or the tape winding process, specifically, a prepreg in a tow or tape shape is wound around an outer surface of a balloon, a mandrel, or a liner, and then cured by heating, whereby a composite material having a desired shape can be produced.

In the braiding process, for example, a balloon or a mandrel is used to form a prepreg by braiding a tow or tape-shaped prepreg with a braider in one direction or in a braid structure, and then heating and curing the prepreg is performed. In the braiding process, a tow or tape-shaped prepreg may be braided and molded without using a balloon or a mandrel.

In a case where a sheet-shaped prepreg using a unidirectional (UD) material, a woven fabric, a nonwoven fabric, etc. as the continuous fiber is used, a composite material can be produced by one prepreg or stacking a plurality of prepregs and placing the prepreg(s) in a mold, and curing the prepreg(s) by heating under a vacuum condition, or a pressurized condition.

The method for curing the prepreg in the production of the composite material is also not particularly limited, and is conducted by a known method at a temperature and for a time sufficient to cure the epoxy resin composition contained in the prepreg. The conditions for curing the prepreg depend on the thickness, etc. of the prepreg and the composite material to be formed. For example, the curing temperature can be selected in the range of from 10 to 180°C and the curing time can be selected in the range of from 5 minutes to 200 hours, and from the viewpoint of productivity, the curing temperature is preferably in the range of from 80 to 180°C and the curing time is preferably in the range of from 10 minutes to 5 hours.

The composite material according to an embodiment of the present invention is preferably used for a molded body having a hollow shape such as a pipe, a shaft, a cylinder, or a tank, from the viewpoint of production using a prepreg having a tow or tape shape. Since the composite material is excellent in a hydrogen gas barrier property, it is particularly preferable as a material for forming a high-pressure gas container.

### [High-Pressure Gas Container]

The high-pressure gas container according to an embodiment of the present invention includes the fiber-reinforced composite material. It is sufficient that at least a part of the high-pressure gas container according to an embodiment of the present invention is composed of the fiber-reinforced composite material. For example, in the case of a high-pressure gas container having a liner and an outer layer provided so as to cover the outer surface of the liner, at least one of the liner or the outer layer may be composed of the fiber-reinforced composite material. In the case of a linerless high-pressure gas container, a linerless high-pressure gas container entirely composed of the fiber-reinforced composite material may be exemplified.

Specific embodiments of the high-pressure gas container including the fiber-reinforced composite material include (1) a configuration including a liner made of a metal and an outer layer made of the fiber-reinforced composite material according to an embodiment of the present invention, (2) a configuration including a liner made of a resin and an outer layer made of the fiber-reinforced composite material according to an embodiment of the present invention, (3) a configuration including a liner made of the fiber-reinforced composite material according to an embodiment of the present invention and an outer layer made of a material other than the fiber-reinforced composite material, (4) a configuration including only a container made of the fiber-reinforced composite material according to an embodiment of the present invention (linerless), etc.

Examples of the metal used in the "liner made of a metal" of (1) include light alloys such as an aluminum alloy or a magnesium alloy.

The resin used in the "liner made of a resin" in (2) is not particularly limited as long as it is a resin that excels in pressure resistance and gas barrier properties such as a hydrogen gas barrier property, and examples of the resin include a thermoplastic resin, a cured product of a thermosetting resin, and a cured product of a photocurable resin. Among these, a thermoplastic resin is preferable from the viewpoint of ease of molding the liner.

Examples of the thermoplastic resin include a polyamide resin, a polyester resin, a polyolefin resin, a polyimide resin, a polycarbonate resin, a polyether imide resin, a polyamide imide resin, a polyphenylene ether imide resin, a polyphenylene sulfide resin, a polysulfone resin, a polyester sulfone resin, a polyacrylate resin, a liquid crystal polymer, a polyether ether ketone resin, a polyether ketone resin, a polyether ketone ketone resin, a polyether ether ketone ketone resin, and a polybenzimidazole resin, and of these, a single type may be used, or two or more types may be combined and used.

From the viewpoint of hydrogen gas barrier properties and pressure resistance, the thermoplastic resin is preferably at least one selected from the group consisting of a polyamide resin and a polyolefin resin, and more preferably a polyamide resin.

In addition, from the viewpoint of increasing impact resistance, the resin liner can also contain the stress relaxation component mentioned above.

The "outer layer made of a material other than the fiber-reinforced composite material" in the (3) is preferably an outer layer made of a fiber-reinforced composite material other than the fiber-reinforced composite material according to an embodiment of the present invention from the viewpoint of improving the reinforcing property.

In the embodiments of (1) to (3), the outer layer can be formed so as to cover the outer surface of the liner main body without a gap.

The outer layer may be provided directly on the outer surface of the liner. Alternatively, one or more additional layer(s) may be provided on the outer surface of the liner, and the outer layer 2 may be provided on the surface of the additional layer(s). For example, to improve the tight adhesiveness between the liner and the outer layer, an adhesive layer may be provided between the liner and the outer layer.

In a case where the high-pressure gas container is in the embodiment of (1) or (2), the thickness of the outer layer made of the fiber-reinforced composite material according to an embodiment of the present invention can be appropriately selected according to the capacity, shape, and other properties of the high-pressure gas container. The thickness of the outer layer is preferably 100 µm or more, more preferably 200 µm or more, still more preferably 400 µm or more from the viewpoint of imparting a high hydrogen gas barrier property and impact resistance, and is preferably 80 mm or less, more preferably 60 mm or less from the viewpoint of reducing the size and weight of the high-pressure gas storage tank.

In a case where the high-pressure gas container is the embodiment of the (3), the thickness of the liner made of the fiber-reinforced composite material according to an embodiment of the present invention can be appropriately selected according to the capacity, shape, and other properties of the high-pressure gas container. The thickness of the liner is preferably 100 µm or more, more preferably 200 µm or more, still more preferably 400 µm or more from the viewpoint of a hydrogen gas barrier property and pressure resistance, and is preferably 60 mm or less, more preferably 40 mm or less from the viewpoint of miniaturization and weight reduction of the high-pressure gas container.

In a case where the high-pressure gas container is the embodiment of the (4), the thickness of the container made of the fiber-reinforced composite material according to an embodiment of the present invention can be appropriately selected according to the capacity, shape, and other properties of the high-pressure gas container. The thickness of the container is preferably 1 mm or more, more preferably 2 mm or more, still more preferably 5 mm or more from the viewpoint of a hydrogen gas barrier property and pressure resistance, and is preferably 80 mm or less, more preferably 60 mm or less from the viewpoint of miniaturization and weight reduction of the high-pressure gas container.

From the viewpoint of obtaining high strength and high elastic modulus, the content of the reinforcing fibers in the liner, the outer layer, or the high-pressure gas container made of the fiber-reinforced composite material according to an embodiment of the present invention is in a range that makes the volume fraction of the reinforcing fibers preferably 0.10 or more, more preferably 0.20 or more, still more preferably 0.30 or more, and still more preferably 0.40 or more. In addition, from the viewpoints of a hydrogen gas barrier property, impact resistance, and molding processability, the content of the reinforcing fibers is preferably in a range that makes the volume fraction of the reinforcing fibers 0.85 or less, more preferably 0.80 or less, even more preferably 0.75 or less, and yet even more preferably 0.70 or less.

The volume fraction of the reinforcing fiber can be calculated by the same method as described above.

Among the above, from the viewpoint of a lightweight property, and the viewpoint that a high hydrogen barrier property is required for the fiber-reinforced composite material, the high-pressure gas container is preferably of any one of the embodiments (2), (3) and (4), more preferably the embodiment (3) or (4).

Note that the high-pressure gas container may further have a component made of a material other than the fiber-reinforced composite material, such as a pipe sleeve and a valve. Furthermore, any optional layer such as a protective layer, a coating layer, and an antirust-containing layer may be formed on the surface of the high-pressure gas container.

The gas to be stored in the high-pressure gas container may be any material that is in gas phase at 25°C and 1 atm, and examples thereof include hydrogen, oxygen, carbon dioxide, nitrogen, argon, LPG, alternative chlorofluorohydrocarbons, and methane. Among these, the gas is preferably hydrogen from the viewpoint of efficacy of the present invention.

### <Method for producing high-pressure gas container>

As a method for producing the high-pressure gas container according to an embodiment of the present invention, the production method described in the method for producing a fiber-reinforced composite material described above can be appropriately used depending on the form of the reinforcing fibers or the prepreg to be used. In a case where a tow or tape-shaped prepreg is used to manufacture a high-pressure gas container, the tow or tape-shaped prepreg can be molded by the filament winding process, the tape winding process, the braiding process, the 3D printer method, etc. to manufacture the high-pressure gas container.

In a case where the high-pressure gas container is of the embodiment of (1) or (2), a tow or tape-shaped prepreg is wound so as to cover an outer surface of a metallic or resin liner using the filament winding process or the tape winding process, and then heated and cured to form an outer layer made of a fiber-reinforced composite material, whereby the high-pressure gas container can be manufactured.

In a case where the high-pressure gas container is of the embodiment of the (3) or (4), a tow or tape-shaped prepreg is formed into a container shape by the filament winding process, the tape winding process, the braiding process, the 3D printer process, etc., and then heated and cured to manufacture a high-pressure gas container.

### Examples

The present invention will be described in further detail hereinafter using Examples and Comparative Examples, but the present invention is not limited to the following Examples. The measurements and evaluations in the present Examples were performed by the following methods.

### <Hydrogen gas permeability coefficient [cc·cm/(cm²·s·cmHg)]>

The epoxy resin composition prepared in each example was heated to 100°C and poured into a mold (120 mm × 120 mm × 1 mm) coated with a release agent ("FREKOTE 770-NC" available from Henkel Corporation), and heated and cured at 160°C for 2 hours to obtain a plate-shaped test piece (thickness: 1 mm). The hydrogen gas permeability coefficient [cc·cm/(cm² ·s ·cmHg)] of the test piece was measured in a dry state at 23°C by a differential pressure method using a gas permeability measuring device ("GTR-30X" available from GTR Tech Co., Ltd.).

### <Moldability>

The epoxy resin composition prepared in each example was diluted with methyl ethyl ketone to prepare a solution having a concentration of 50 mass%. Furthermore, using unidirectional non-crimp fibers "UT 70-30G" (basis weight: 300 g/m²) available from Toray Industries, Inc. as continuous reinforcing fibers, a molded body (fiber-reinforced composite material) was prepared by the following method, and the moldability was evaluated.

The fibers were impregnated with an epoxy resin composition solution having a concentration of 50 mass%, and heated at 80°C for 20 minutes to remove the solvent, thereby a prepreg was prepared. A total of six layers of the obtained prepregs were laminated so that the filament directions were arranged in an alternately crosswise manner (0°/90°/0°/90°/0°/90°). This was subjected to heating-and-pressing molding under the conditions of a temperature of 160°C and a pressure of 0.3 MPa for 2 hours using a vacuum press machine to prepare a molded body having a volume fraction Vf of reinforcing fibers of 0.50 and a thickness of 2 mm. The appearance of the obtained molded body was visually observed and evaluated according to the following criteria.

### (Evaluation Criteria)

A: There was no scorching or discoloration in the molded body, and the appearance was good.
B: Discoloration was observed in the molded body, but scorching was substantially suppressed.
C: Scorching was observed in the molded body, the color of the molded body turned into brown and the appearance of the molded body was impaired.

### <Pot Life>

The initial viscosity at 23°C of the epoxy resin composition prepared in each example was measured, and 10 g of the epoxy resin composition was then placed in a plastic cup (diameter: 46 mm) and stored at 23°C. The time [h] at which the viscosity of the epoxy resin composition reached at least twice the initial viscosity was determined and shown in the table. In the table, those having a pot life exceeding 24 hours are indicated as ">24".

The viscosity of the epoxy resin composition was measured using an E-type viscosimeter "TVE-22H type viscosimeter cone plate type" (available from Toki Sangyo Co., Ltd.).

### <Shelf Life>

10 g of the epoxy resin composition prepared in each example was put in a plastic cup (diameter: 46 mm) and stored at 0°C. The epoxy resin composition was brought back to room temperature (23°C) at a certain interval, the fluidity was visually observed, and the number of days [day] until the composition lost its fluidity during the storage at 0°C was shown in the table. In the table, those having a shelf life exceeding 30 days are indicated as ">30".

### <Tensile strength of carbon fiber-reinforced composite material>

The epoxy resin composition prepared in each example was applied onto a release PET film using a knife coater to form an uncured product layer (application amount of resin composition: 40 g/m²). A total of two identical sheets were prepared.

The uncured product layer was overlaid on both surfaces of a UD material ("T700S-12K-60E" available from Toray Industries, Inc., 100 mm × 200 mm, basis weight: 150 g/m²) in which carbon fibers were arranged in one direction in a sheet shape, and heated and pressed under conditions of a temperature of 100°C and a pressure of 1 MPa using a hot press device to be impregnated with an epoxy resin composition, thereby a UD tape was prepared as a prepreg.

6 sheets of the obtained UD tape were laminated and heated at 160°C for 2 hours to prepare a carbon fiber-reinforced composite material in which carbon fibers were arranged in one direction. The volume fraction Vf of carbon fibers in the composite material was adjusted to 0.50.

Using the composite material, a 1A type test piece specified in JIS K7161-2: 2014 was prepared and used for the measurement. Using a tensile tester ("AGX-100kNplus" available from Shimadzu Corporation), a tensile test was performed at a temperature of 23°C, a distance between grips of 50 mm, and a test speed of 1 mm/min in accordance with JISK7161 -1: 2014 and K7161-2: 2014, and the tensile strength was measured.

### Example 1 (Preparation and Evaluation of Epoxy Resin Composition)

As the epoxy resin (A), component (A1): resorcinol diglycidyl ether ("Denacol EX-201" available from Nagase ChemteX Corporation, epoxy equivalent: 117 g/eq) and component (a2-1): bisphenol F diglycidyl ether ("jER807" available from Mitsubishi Chemical Corporation, epoxy equivalent: 168 g/eq) were used, and as the epoxy resin curing agent (B), a phenol novolac-type curing agent ("TD-2131" available from DIC Corporation, hydroxyl value equivalent: 104 g/eq) was used. Furthermore, as the curing accelerator (C), 2-ethyl-4-methylimidazole (available from Tokyo Chemical Industry Co., Ltd.) was used. These were blended and mixed in mass parts shown in Table 1 to obtain an epoxy resin composition. The ratio of the number of active hydrogens in the epoxy resin curing agent to the number of epoxy groups in the epoxy resin (the number of active hydrogens in the epoxy resin curing agent/the number of epoxy groups in the epoxy resin) was 1/1.

The produced epoxy resin composition was evaluated by the method described above. The results are indicated in Table 1.

### Examples 2 to 10, Comparative Examples 1 to 4

An epoxy resin composition was prepared and evaluated by the same method as in Example 1 except that the types and blending amounts of the epoxy resin (A), the epoxy resin curing agent (B), and the curing accelerator (C) were changed as shown in Table 1. The results are indicated in Table 1.

The blending amounts (parts by mass) in Table 1 are all active ingredient amounts. Furthermore, in Table 1, the epoxy resin curing agent other than the phenolic curing agent is indicated as (B').

### [Table 1]

**Table 1**

| (parts by mass) | | | | Examples | | | | | | | | | | Comparative Examples | | | |
|---|---|---|---|---|---|---|---|---|---|---|---|---|---|---|---|---|---|
| | | | | 1 | 2 | 3 | 4 | 5 | 6 | 7 | 8 | 9 | 10 | 1 | 2 | 3 | 4 |
| | Epoxy resin (A) | (A1) | Resorcinol diglycidyl ether | 20 | 40 | 60 | 80 | 40 | 40 | 40 | 40 | 25 | 10 | 50 | 90 | 25 | |
| | | (A2) | (a2-1) Bisphenol F diglycidyl ether (jER807) | 80 | 60 | 40 | 20 | 60 | 60 | 30 | 30 | 25 | | 50 | 10 | 25 | |
| | | | (a2-2) Naphthalene epoxy resin (HP-4032SS) | | | | | | | | 30 | 50 | 90 | | | | |
| | | | Bisphenol A diglycidyl ether (jER828) | | | | | | | 30 | | | | | | 50 | 100 |
| | Epoxy Resin Curing Agent | (B) | Phenol novolac-type curing agent (TD-2131) | 68 | 74 | 80 | 85 | | | 71 | 77 | 75 | 73 | | 88 | 66 | 56 |
| | | | Phenol novolac-type curing agent (TD-2106) | | | | | 74 | | | | | | | | | |
| | | | Phenol novolac-type curing agent (TD-2093) | | | | | | 74 | | | | | | | | |
| | | (B') | MXDA | | | | | | | | | | | 25 | | | |
| Epoxy Resin Composition | Curing accelerator | (C) | 2-Ethyl-4-mcthylimidazolc | 1 | 1 | 1 | 1 | 1 | 1 | 1 | 1 | 1 | 1 | | 1 | 1 | 1 |
| | Content (mass%) of (A1) in (A) | | | 20 | 40 | 60 | 80 | 40 | 40 | 40 | 40 | 25 | 10 | 50 | 90 | 25 | 0 |
| | Content (mass%) of (A2) in (A) | | | 80 | 60 | 40 | 20 | 60 | 60 | 60 | 60 | 75 | 90 | 50 | 10 | 75 | 100 |
| | Total content (mass%) of (a2-1) and (a2-2) in (A2) | | | 100 | 100 | 100 | 100 | 100 | 100 | 50 | 100 | 100 | 100 | 100 | 100 | 33 | 0 |
| | Content (mass%) of component (A) in epoxy resin composition | | | 59.2 | 57.1 | 55.2 | 53.8 | 57.1 | 57.1 | 58.1 | 56.2 | 56.8 | 57.5 | 80.0 | 52.9 | 59.9 | 63.7 |
| | Content (mass%) of component (B) in epoxy resin composition | | | 40.2 | 42.3 | 44.2 | 45.7 | 42.3 | 42.3 | 41.3 | 43.3 | 42.6 | 42.0 | 0.0 | 46.6 | 39.5 | 35.7 |
| | Content (mass%) of component (C) in epoxy resin composition | | | 0.6 | 0.6 | 0.6 | 0.5 | 0.6 | 0.6 | 0.6 | 0.6 | 0.6 | 0.6 | 0.0 | 0.5 | 0.6 | 0.6 |
| | Number of active hydrogens in curing agent/Number of epoxy groups in epoxy resin | | | 1/1 | 1/1 | 1/1 | 1/1 | 1/1 | 1/1 | 1/1 | 1/1 | 1/1 | 1/1 | 1/1 | 1/1 | 1/1 | 1/1 |
| | Hydrogen gas permeability coefficient [cc·cm/(cm²·scc·cmHg)]) | | | 7.26E-11 | 6.10E-11 | 4.90E-11 | 3.70E-11 | 8.10E-11 | 8.40E-11 | 7.90E-11 | 5.80E-11 | 6.20E-11 | 6.90E-11 | 2.70E-11 | 3.10E-11 | 1.00E-10 | 8.98E-11 |
| | Moldability (scorching and discoloration of resin) | | | A | A | A | A | A | A | A | A | A | A | B | C | A | A |
| Evaluation Results | Pot life (h) | | | > 24 | > 24 | > 24 | > 24 | > 24 | > 24 | > 24 | > 24 | > 24 | > 24 | 2 | > 24 | > 24 | > 24 |
| | Shelf life (day) | | | > 30 | > 30 | > 30 | > 30 | > 30 | > 30 | > 30 | > 30 | > 30 | > 30 | 6 | > 30 | > 30 | > 30 |
| | Tensile strength (MPa) of carbon fiber-reinforced composite material | | | 1780 | 1750 | 1703 | 1780 | 1720 | 1800 | 1830 | 1850 | 1880 | 1840 | - | - | - | - |

The components described in Table 1 are as follows.

### <Epoxy resin (A)>

(A1) Resorcinol diglycidyl ether ("Denacol EX-201" available from Nagase ChemteX Corporation, epoxy equivalent: 117 g/eq)
(a2-1) Bisphenol F diglycidyl ether ("jER807" available from Mitsubishi Chemical Corporation, epoxy equivalent: 168 g/eq)
(a2-2) Naphthalene epoxy resin ("HP-4032SS" available from DIC Corporation, an epoxy resin represented by the formula (a2-2-3), epoxy equivalents: 143 g/eq)
Bisphenol A diglycidyl ether ("jER828" available from Mitsubishi Chemical Corporation, epoxy equivalent: 186 g/eq)

### <Epoxy resin curing agent>

Phenol novolac-type curing agent (TD-2131) ("TD-2131" available from DIC Corporation, hydroxyl equivalent: 104 g/eq, softening point: 78 to 82°C)
Phenol novolac-type curing agent (TD-2106) ("TD-2106" available from DIC Corporation, hydroxyl equivalent: 104 g/eq, softening point: 88 to 95°C)
Phenol novolac-type curing agent (TD-2093) ("TD-2093" available from DIC Corporation, hydroxyl equivalent: 104 g/eq, softening point: 98 to 102°C)
MXDA: meta-Xylylenediamine (available from MITSUBISHI GAS CHEMICAL COMPANY, INC.)

### <Curing accelerator (C)>

### 2-Ethyl-4-methylimidazole (available from Tokyo Chemical Industry Co., Ltd.)

From Table 1, the epoxy resin composition according to an embodiment of the present invention is less likely to cause scorching and discoloration even when molded by heating to 160°C, and the resulting cured product has a high hydrogen gas barrier property. Furthermore, the pot life and shelf life of the epoxy resin composition are sufficiently long. Moreover, it was confirmed that all of the carbon fiber-reinforced composite materials obtained by using the epoxy resin composition had a tensile strength of 1700 MPa or more and thus had a high strength.

On the other hand, in the epoxy resin composition of Comparative Example 1 using the epoxy resin curing agent, which contained no phenolic curing agent, discoloration occurred during thermal molding even though the curing accelerator (C) was not used, and the pot life and shelf life were short. On the other hand, when the epoxy resin composition of Comparative Example 2, which used an epoxy resin having a high ratio of the component (A1), scorching was observed. The cured products of the epoxy resin compositions of Comparative Examples 3 and 4, which had both low rates of the components (a2-1) and (a2-2) in the epoxy resin (A2), were not able to get a sufficient hydrogen gas barrier property.

### Industrial Applicability

The present invention provides an epoxy resin composition which has a long pot life and a long shelf life, is suitable for preparing a tow prepreg, causes little scorching during molding, and can achieve a high hydrogen gas barrier property. Also provided are a cured product of the epoxy resin, a prepreg, a fiber-reinforced composite material using the epoxy resin composition, and a high-pressure gas container containing the fiber-reinforced composite material. The high-pressure gas container has a high hydrogen gas barrier property and is suitable as a container for storing high-pressure hydrogen gas.

## Claims

1. An epoxy resin composition comprising an epoxy resin (A), an epoxy resin curing agent (B) containing a phenolic curing agent, and a curing accelerator (C),
wherein the epoxy resin (A) comprises from 10 to 85 mass% of an epoxy resin (A1) and from 15 to 90 mass% of an epoxy resin (A2), the epoxy resin (A1) having a glycidyloxy group derived from resorcinol, and the epoxy resin (A2) being other than the epoxy resin (A1) and comprising an aromatic ring,
the epoxy resin (A2) comprises at least one type selected from the group consisting of an epoxy resin (a2-1) having a glycidyloxy group derived from bisphenol F, and an epoxy resin (a2-2) having a glycidyloxy group derived from a polyol having a naphthalene backbone, and
a total content of the epoxy resin (a2-1) and the epoxy resin (a2-2) in the epoxy resin (A2) is 50 mass% or more.

2. The epoxy resin composition according to claim 1, wherein the curing accelerator (C) is at least one type selected from the group consisting of imidazoles, tertiary amines, and phosphorus compounds.

3. The epoxy resin composition according to claim 1 or 2, wherein a cured product of the epoxy resin composition has a hydrogen gas permeability coefficient of 8.4 × 10⁻¹¹ [cc·cm/(cm²·s·cmHg)] or less.

4. The epoxy resin composition according to any one of claims 1 to 3, wherein the phenolic curing agent has a softening point of from 70 to 120°C.

5. A cured product of the epoxy resin composition described in any one of claims 1 to 4.

6. A prepreg comprising a reinforcing fiber impregnated with the epoxy resin composition described in any one of claims 1 to 4.

7. The prepreg according to claim 6, wherein the reinforcing fiber is at least one type selected from the group consisting of a glass fiber, a carbon fiber, and a basalt fiber.

8. The prepreg according to claim 6 or 7, wherein the prepreg is a tow prepreg.

9. The prepreg according to claim 6 or 7, wherein the prepreg is a UD tape.

10. A fiber-reinforced composite material which is a cured product of the prepreg described in any one of claims 1 to 9.

11. A high-pressure gas container comprising the fiber-reinforced composite material described in claim 10.
